# EUROPÄISCHE PATENTSCHRIFT

(11) **EP 3 884 193 B1**
(45) Veröffentlichungstag und Bekanntmachung des Hinweises auf die Patenterteilung: **29.12.2021**
(21) Anmeldenummer: 20839325.6
(22) Anmeldetag: 23.12.2020
(51) Int. Cl.: F16L 19/028

(54) **ÜBERWURFSCHRAUBE FÜR EINE MIT WENIGSTENS EINEM BÖRDEL VERSEHENE ROHRLEITUNG, INSBESONDERE BREMSROHRE**
UNION SCREW FOR A PIPELINE PROVIDED WITH AT LEAST ONE FLANGE, IN PARTICULAR A BRAKE PIPE
VIS CHAPEAU CONÇUE POUR UNE CONDUITE ÉQUIPÉE D'AU MOINS UN REBORD, EN PARTICULIER DES TUYAUX DE FREINAGE

(30) Priorität: 27.12.2019 DE 102019135827
(43) Veröffentlichungstag der Anmeldung: 29.09.2021
(73) Patentinhaber: Cooper-Standard Automotive (Deutschland) GmbH, 89601 Schelklingen (DE)
(72) Erfinder: ABBOTT, Sebastian, 69123 Heidelberg (DE)
(74) Vertreter: Flügel Preissner Schober Seidel
(86) Internationale Anmeldenummer: PCT/EP2020/087797
(87) Internationale Veröffentlichungsnummer: WO 2021/130330

(56) Entgegenhaltungen:
- EP-A1- 3 555 512
- DE-B3-102012 108 433
- DE-U1-202017 104 112

## Beschreibung

Die Erfindung betrifft eine Überwurfschraube für mit wenigstens einem Bördel versehene Rohrleitungen, insbesondere Bremsrohre.

Die Überwurfschraube umfasst einen metallenen Grundkörper, der sich in einer axialen Richtung erstreckt und eine Durchgangsöffnung aufweist, die dazu ausgestaltet ist, die Rohrleitung aufzunehmen. Ein an dem Grundkörper ausgebildeter Schraubenkopf ist dazu ausgestaltet, ein Drehmoment auf die Überwurfschraube zu übertragen. Ein an dem Grundkörper ausgebildeter Gewindeabschnitt weist ein Außengewinde auf und ist dazu ausgestaltet, die Überwurfschraube in ein Gewindeloch einzuschrauben. Ein an dem Grundkörper ausgebildeter Kontaktabschnitt ist dazu ausgestaltet, an dem Bördel der Rohrleitung anzuliegen. Der metallene Grundkörper ist mit einer insbesondere gegen Korrosion schützende Funktionsschicht beschichtet.

Eine derartige Überwurfschraube wird in der Norm DIN 74 233, Teil 1 betreffend Bremsrohrarmaturen beschrieben und findet üblicherweise Anwendung für mit einem Bördel versehene Bremsrohre gemäß der Norm DIN 74 234. Die Bremsrohre haben typischerweise an jedem Ende einen Bördel.

Bremsrohre, auch Bremsleitungen genannt, oder Kraftstoffrohrleitungen, auch Kraftstoffleitungen genannt, die in Kraftfahrzeugen Anwendung finden und starr oder biegsam ausgestaltet sein können, verfügen in der Regel über einen aus mehreren Schichten bestehenden Aufbau. Ein Innenrohr, das meist aus Aluminium oder Stahl besteht, ist von einer Korrosionsschutzschicht umgeben, die zum Schutz vor äußeren Einflüssen mit einer Schutzschicht, die im Allgemeinen aus Kunststoff besteht oder als Lackschicht ausgebildet ist, ummantelt ist.

Zum Anschluss einer derartigen Rohrleitung, beispielsweise an ein Aggregat des Bremssystems eines Kraftfahrzeugs, etwa einen Bremszylinder oder einen Bremskraftverstärker, werden sogenannte Überwurfschrauben oder Rohrschrauben verwendet, die eine Durchgangsöffnung zur Aufnahme der Rohrleitung und ein Außengewinde zum Einschrauben in eine mit einem Innengewinde versehene Öffnung des Aggregats, das sogenannte Gewindeloch, aufweisen. Ein solches Gewindeloch wird beispielsweise in der Norm DIN 74 235 betreffend Gewindelöcher beschrieben.

Die Rohrleitung wird derart in die Durchgangsöffnung eingesetzt, dass der am Ende der Rohrleitung angeordnete Bördel beim Einschrauben der Überwurfschraube in die Öffnung des Aggregats dichtend gegen eine sich am Grund der Öffnung befindende Anschlussfläche gedrückt und damit zwischen der Anschlussfläche und einer am Kontaktabschnitt der Überwurfschraube angeordneten Kontaktfläche in der Öffnung gehalten wird.

Eine gattungsgemäße Überwurfschraube ist aus EP 3 555 512 A1 beziehungsweise WO 2019/025587 A1 bekannt. Weiterhin werden Überwurfschrauben zum Befestigen von Rohrleitungen zum Beispiel in DE 10 2012 108 433 B3, DE 42 36 323 A1, EP 2 136 119 A1 und DE 20 2014 102 663 U1 und DE 20 2017 104 112 U1 beschrieben.

Die aus DE 10 2012 108 433 B3 bekannte Rohrschraube zeichnet sich dadurch aus, dass auf die Kontaktfläche zwei Lagen einer reibungsvermindernden Schicht, bei der es sich um einen auf Polyethylen basierenden Trockengleitfilm handelt, aufgetragen ist. Die Rohrschraube erzeugt auf diese Weise im Bereich der Kontaktfläche einen vergleichsweise geringen Reibwert, der sicherstellt, dass beim Kontaktieren des Bördels der Rohrleitung und der damit auftretenden Reibung eine Torsion der Rohrleitung unterbleibt. Denn eine auftretende Torsion führte zu einer unerwünschten Torsionsspannung in der Rohrleitung, welche die Gefahr eines Lockerns der Rohrschraube hervorruft. Ein geringer Reibwert im Bereich der Kontaktfläche wird bei der aus DE 20 2014 102 663 U1 bekannten Rohrschraube ebenfalls durch eine zweifache Beschichtung erzeugt.

Die aus DE 20 2017 104 112 U1 bekannten Überwurfschraube weist eine Beschichtung auf, die neben einem Gleitmittel zumindest 40 Gew.-% einer Epoxidverbindung, insbesondere auf Basis von Phenol, enthält.

Der Bördel der Rohrleitung wird üblicherweise durch Umformen hergestellt. Die in axialer Richtung der Rohrleitung vordere Fläche des Bördels fungiert als Dichtfläche und muss demnach möglichst glatt und frei von Rissen und Riefen sein. Daher ist es erforderlich, die Schutzschicht in einem Endabschnitt der Rohrleitung vor dem Umformen zu entfernen. Dieses Entschichten erfolgt in der Regel entweder mittels einer mechanischen Bearbeitung, bei der durch ein Schälwerkzeug, wie es beispielsweise aus DE 202 14 365 U1 bekannt ist, oder durch ein eine wechselnde Druckbeaufschlagung erzeugendes Rollenwerkzeug, wie es aus DE 10 2013 011 213 B3 bekannt ist, die Schutzschicht im Bereich des Endabschnitts abgelöst wird, oder mittels einer Laserbearbeitung, wie es aus DE 295 10 705 U1 bekannt ist, bei der die Schutzschicht mittels eines Laserstrahls entfernt wird.

Um die Reibung zwischen dem Bördel der Rohrleitung und dem Kontaktabschnitt der Überwurfschraube möglichst gering zu halten, ist es aus EP 3 129 691 B1 und EP 3 347 638 B1 bekannt, die Schutzschicht in dem Endabschnitt der Rohrleitung nur zum Teil zu entfernen, und zwar derart, dass ein auf der dem Kontaktabschnitt zugewandten Fläche des Bördels verbleibender Rest der Schutzschicht eine vergleichsweise geringe Reibung sicherstellt.

Die zwischen dem Gewindeloch und dem Gewindeabschnitt der Überwurfschraube auftretende Reibung soll hingegen möglichst hoch sein, um einen festen und dauerhaften Sitz der Überwurfschraube im Gewindeloch sicherzustellen. Die Aggregate, die das Gewindeloch weisen, können allerdings aus unterschiedlichen Werkstoffen bestehen, in der Regel Aluminium oder Stahl. Beschichtungen der Überwurfschraube im Bereich des Gewindeabschnitts, wie sie beispielsweise aus EP 2 957 796 A1 bekannt sind, haben den Nachteil, dass der Reibwert in Abhängigkeit von dem Werkstoff, aus dem der sogenannte Reibpartner, also etwa das Innengewinde des Gewindelochs, besteht, stark variiert. Dies hat sich in der Praxis als unerwünscht herausgestellt, da in der Regel ein definiertes, möglichst gleiches Anzugsdrehmoment für die Überwurfschraube gefordert wird.

Weiterhin ist aus DE 10 2007 044 682 A1 eine Befestigungsmutter bekannt, die mit einem Mutternkörper und einer Gewindebohrung versehen ist. Der Mutternkörper weist eine die Gewindebohrung umgebende Auflagefläche für einen als Verliersicherung dienenden Ring auf. Die Auflagefläche ist von einem umlaufenden Bördelkragen umgeben. Die Befestigungsmutter ist mit einer Zink-Lamellen-Beschichtung versehen, die als Korrosionsschutz dient.

Ein Meißelhalterwechselsystem, das ein Basisteil mit einer Meißelhalteraufnahme, in die ein mit einem Meißel bestückter Meißelhalter einsetzbar ist, aufweist, beschreibt DE 101 61 713 A1. Der Meißelhalter wird mit einem Halterschaft in die Meißelhalteraufnahme eingeführt und mittels Spannschrauben darin festgehalten. Die Spannschrauben sind in eine Gewindeaufnahme des Basisteils einschraubbar und stützen sich dabei unter Spannung in einer Spannaufnahme des Halterschaftes ab. Die Oberflächen des Außengewindes der Spannschraube und des Innengewindes der Gewindeaufnahme sind mit einer metallischen Schicht aus Zink- und Aluminiumlamellen und einem mineralischen Chromoxyd-Bindemittel versehen, die nach dem Aufbringen eingebrannt werden.

Der Erfindung liegt die **Aufgabe** zugrunde, eine Überwurfschraube und ein Verfahren zum Herstellen einer Überwurfschraube zu schaffen, durch die sich ein Anzugsdrehmoment erzeugen lässt, das möglichst invariant in Bezug auf den Werkstoff des Reibpartners der Überwurfschraube ist.

Diese Aufgabe wird durch eine Überwurfschaube gemäß Anspruch 1, die Verwendung der Überwurfschraube gemäß Anspruch 11 und das Verfahren zum Herstellen der Überwurfschraube gemäß Anspruch 12 **gelöst**. Bevorzugte Ausgestaltungen der Erfindung werden in den Ansprüchen 2 bis 10 und 13 bis 17 definiert.

Die erfindungsgemäße Überwurfschraube für mit einem Bördel versehene Rohrleitungen, insbesondere Bremsrohre, umfasst einen metallenen Grundkörper, der sich in einer axialen Richtung erstreckt und eine Durchgangsöffnung aufweist, die in einer radialen Richtung einen Durchmesser hat und dazu ausgestaltet ist, die Rohrleitung aufzunehmen. Die Überwurfschraube umfasst ferner einen an dem Grundkörper ausgebildeten Schraubenkopf, der dazu ausgestaltet ist, ein Drehmoment auf die Überwurfschraube zu übertragen. Die Überwurfschraube umfasst zudem einen an dem Grundkörper ausgebildeten Gewindeabschnitt, der ein Außengewinde aufweist und dazu ausgestaltet ist, die Überwurfschraube in ein Gewindeloch einzuschrauben, und einen an dem Grundkörper ausgebildeten Kontaktabschnitt, der dazu ausgestaltet ist, an dem Bördel der Rohrleitung anzuliegen.

Die Überwurfschraube weist eine Funktionsschicht auf, mit welcher der Grundkörper zumindest im Bereich des Gewindeabschnitts und des Kontaktabschnitts beschichtet ist. Die Funktionsschicht ist erfindungsgemäß mehrlagig und setzt sich zumindest aus einer Grundschicht und einer auf die Grundschicht wenigstens bereichsweise aufgetragenen Deckschicht zusammen. Die Deckschicht enthält zum Erzeugen eines reibungsvermindernden Überzugs ein Gleitmittel. Die Grundschicht enthält zum Erzeugen eines Korrosionsschutzes ein Bindemittel und Zink.

Um neben einem zuverlässigen Korrosionsschutz auch eine weitgehende Invarianz in Bezug auf die üblichen Reibpartner der Überwurfschraube, also etwa ein Gegengewinde aus insbesondere Aluminium oder aus Stahl, in das die Überwurfschraube im eingebauten Zustand eingreift, zu erzielen, bildet die Grundschicht erfindungsgemäß eine Struktur, bei der das Zink in Form von zinkhaltigen Lamellen vorliegt. Die zinkhaltigen Lamellen, das heißt Zinklamellen, sind im Wesentlichen eben oder flach auf dem Grundkörper liegend ausgerichtet, um eine wirkungsvolle Verbindung mit dem Grundkörper zu erzeugen.

Unter einer im Wesentlichen eben oder flach auf dem Grundkörper liegenden Ausrichtung der Zinklamellen im Sinne der vorliegenden Erfindung wird eine Anordnung verstanden, bei der die Zinklamellen überwiegend parallel zur Grundschicht liegen. Das heißt, weder muss jede einzelne Zinklamelle oder Zinkflocke parallel zur Grundschicht liegen, noch muss jede einzelne Zinklamelle oder Zinkflocke flach ausgebildet sein.

Eine solche Überwurfschraube wird erfindungsgemäß für eine mit einem Bördel versehene Rohrleitung, insbesondere ein Bremsrohr, verwendet.

Das erfindungsgemäße Verfahren zum Herstellen einer solchen Überwurfschraube ist durch die folgenden Verfahrensschritte gekennzeichnet. Der Grundkörper wird zunächst mit einer ersten Zusammensetzung, die zinkhaltige Lamellen und ein Bindemittel enthält, beschichtet, um die Grundschicht zu erzeugen. Im Anschluss hieran wird der Grundkörper in zumindest einem Teilbereich der Grundschicht mit einer zweiten Zusammensetzung, die ein Gleitmittel enthält, beschichtet, um die Deckschicht zu erzeugen.

Die Erfindung beruht auf der Erkenntnis, dass zinkhaltige, insbesondere plättchenförmige Partikel in Form von Lamellen, die in der Regel fünf bis zehnmal so lang wie hoch und breit sind, nicht nur eine bessere Löslichkeit im Vergleich zu kugelförmigen, das heißt pulverförmigen, Partikel haben, sondern sich aufgrund ihrer Anisotropie im Wesentlichen flach liegend auf der Metalloberfläche des Grundkörpers ausrichten können und damit eine wirkungsvolle Verbindung mit dem Grundkörper erzeugen. Dies gewährleistet zum einen einen zuverlässigen Korrosionsschutz und ruft zum anderen einen Reibwert an der Oberfläche der Überwurfschraube, insbesondere im Bereich des Gewindeabschnitts, hervor, der weitgehend invariant ist in Bezug auf die üblichen Reibpartner der Überwurfschraube, etwa ein Innengewinde in welches das Außengewinde des Gewindeabschnitts eingreift, beziehungsweise den Werkstoff, aus dem diese Reibpartner bestehen, insbesondere Stahl oder Aluminium oder Legierungen hiervon.

Es hat sich herausgestellt, dass eine Reduzierung des sogenannten Rohrdrehmoments oder Rohrmoments eine Funktion der Ebenheit beziehungsweise Flachheit der Zinklamellen und ihrer Parallelität zur Grundschicht ist. Während des Anziehens der Überwurfschraube werden die Scherspannungen in der Grundschicht, die durch das Drehen der Verschraubung verursacht werden, nicht in dem Maße widerstanden wie den senkrechten Kräften, die in der Verbindung entstehen. Mit anderen Worten, es eröffnet sich die Möglichkeit, zwischen den Lamellen in der Richtung, in der die Lamellen liegen, quasi zu "rutschen", wodurch das Rohrdrehmoment signifikant reduziert wird.

Die zinkhaltigen Lamellen sind vorteilhafterweise plättchenförmig und haben demnach eine Länge, eine Breite und eine Dicke. Vorzugsweise betragen die Länge und/oder die Breite und/oder die Dicke zwischen 5 µm und 500 µm, vorzugsweise zwischen 10 µm und 200 µm, und weiter vorzugsweise zwischen 50 µm und 150 µm. Für eine wirkungsvolle Verbindung mit dem Grundkörper und eine wirksame Reduktion des Rohrdrehmoments hat sich die Erstreckung der Lamellen in der Fläche, also entlang der Länge und der Breite, erwiesen. Je nach Anwendungsfall kann die Dicke der Lamellen also durchaus geringer als deren Länge und Breite sein und sich vorzugsweise auch in Bereichen zwischen 10 nm und 900 nm, weiter vorzugsweise zwischen 50 nm und 500 nm, bewegen.

Zink ist der wesentliche Bestandteil der Lamellen. In einer bevorzugten Ausgestaltung der erfindungsgemäßen Überwurfschraube enthalten die zinkhaltigen Lamellen mehr als 50 Gew.% Zink. Vorzugsweise enthalten die zinkhaltigen Lamellen auch Lamellen eines weiteren Metalls, das vorzugsweise aus einer Gruppe ausgewählt ist, die Aluminium, Zinn, Magnesium, Nickel, Kobalt oder Mangan umfasst. In einer besonderen Ausführungsform umfasst die Grundschicht eine Mischung von Zink- und Aluminiumlamellen.

Als vorteilhaft hat sich herausgestellt, wenn das Zink mit einem weiteren Metall legiert ist. Das weitere Metall ist vorzugsweise aus einer Gruppe ausgewählt, die Aluminium, Zinn, Magnesium, Nickel, Kobalt oder Mangan umfasst. Wenn Lamellen aus einer Metalllegierung eingesetzt werden, ist eine Zink-Aluminium-Legierung bevorzugt. Diese Metallbestandteile der Grundschicht sind durch eine Matrix aus dem Bindemittel verbunden.

In einer weiteren bevorzugten Ausgestaltung der erfindungsgemäßen Überwurfschraube enthält das Bindemittel ein Silan. Das Silan weist zweckmäßigerweise funktionelle Gruppen auf, um eine gute Bindung der Metallbestandteile zu ermöglichen. Eine bevorzugte reaktive und funktionelle chemische Einheit ist die Epoxygruppe. Ein besonders geeigneter Vertreter eines solchen Epoxysilans ist γ-Glycidoxypropyltrimethoxysilan.

Bevorzugt enthält das Gleitmittel ein Fluorkohlenwasserstoff, vorzugsweise ein perfluoriertes Kohlenwasserstoff, weiter vorzugsweise Polytetrafluorethylen.

Der Grundkörper ist vorteilhafterweise auch im Bereich des Schraubenkopfes mit der Funktionsschicht beschichtet. Um einen vollflächigen Korrosionsschutz zu gewährleisten, ist vorzugsweise die gesamte Oberfläche des Grundkörpers mit der Funktionsschicht beschichtet.

Bevorzugt ist die Deckschicht auf der gesamten Grundschicht aufgetragen. In der Regel ist es allerdings ausreichend, wenn die Deckschicht nur bereichsweise auf der Grundschicht vorhanden ist. Versuche haben gezeigt, dass ein ausreichender Reibwert auch dann erzielt wird, wenn die Deckschicht fleckig auf der Grundschicht ausgebreitet ist.

In einer bevorzugten Ausgestaltung der erfindungsgemäßen Überwurfschraube bildet die Grundschicht die unterste Lage der Funktionsschicht, das heißt, die Grundschicht ist etwa im Bereich des Gewindeabschnitts die in radialer Richtung innerste Lage.

In einer weiteren bevorzugten Ausgestaltung der erfindungsgemäßen Überwurfschraube bildet die Deckschicht die oberste Lage der Funktionsschicht, das heißt, die Deckschicht ist etwa im Bereich des Gewindeabschnitts die in radialer Richtung äußerste Lage.

Vorteilhafterweise hat die Grundschicht zumindest im Bereich des Gewindeabschnitts und/oder im Bereich des Kontaktabschnitts eine Schichtdicke, die zwischen 0,5 µm und 30,0 µm, vorzugsweise zwischen 1,0 µm und 20,0 µm, weiter vorzugsweise zwischen 5,0 µm und 10,0 µm, beträgt.

Die Deckschicht hat vorteilhafterweise zumindest im Bereich des Gewindeabschnitts und/oder im Bereich des Kontaktabschnitts eine Schichtdicke, die weniger als 5,0 µm, vorzugsweise weniger als 1,0 µm, weiter vorzugsweise weniger als 0,5 µm, beträgt.

Die Grundschicht hat vorteilhafterweise eine Flächengewicht, das zwischen 5,0 g/m² und 40,0 g/m², vorzugsweise zwischen 10,0 g/m² und 30,0 g/m², weiter vorzugsweise zwischen 22,0 g/m² und 26,0 g/m², beträgt.

Die Deckschicht hat vorteilhafterweise eine Flächengewicht, das zwischen 0,5 g/m² und 15,0 g/m², vorzugsweise zwischen 1,0 g/m² und 10,0 g/m², weiter vorzugsweise zwischen 3,0 g/m² und 5,0 g/m², beträgt.

In einer bevorzugten Ausgestaltung des erfindungsgemäßen Verfahrens wird der Grundkörper im gesamten Bereich der Grundschicht mit der zweiten Zusammensetzung beschichtet.

Die erste Zusammensetzung ist bevorzugt eine wässrige Dispersion und vorteilhafterweise eine Suspension. Die erste Zusammensetzung umfasst vorzugsweise plättchenförmige Partikel in Form von Lamellen, die Zink enthalten, und ein Bindemittel, das vorzugsweise ein Silan enthält. Vorteilhafterweise umfasst die erste Zusammensetzung ferner ein Lösungsmittel, das vorzugsweise organisch ist, und/oder Wasser. Weiterhin umfasst die erste Zusammensetzung vorteilhafterweise ein Verdickungsmittel.

Die zweite Zusammensetzung ist bevorzugt ebenfalls eine wässrige Dispersion. Das Gleitmittel enthält vorteilhafterweise ein Fluorkohlenwasserstoff, vorzugsweise ein perfluoriertes Kohlenwasserstoff, weiter vorzugsweise Polytetrafluorethylen.

In einer bevorzugten Ausgestaltung des erfindungsgemäßen Verfahrens umfasst das Beschichten mit der ersten Zusammensetzung ein wenigstens einmaliges, vorzugsweise mehrmaliges, insbesondere zweimaliges, Auftragen der ersten Zusammensetzung auf den Grundkörper. Der Grundkörper wird nach dem Auftragen der ersten Zusammensetzung zweckmäßigerweise einer Wärmebehandlung unterzogen, um die aufgetragene Zusammensetzung zu trocknen und/oder zu vernetzen. Die Wärmebehandlung kann je nach Anwendungsfall entweder in einem Ofen oder an der freien Luft durchgeführt werden.

In einer weiteren bevorzugten Ausgestaltung des erfindungsgemäßen Verfahrens umfasst das Beschichten mit der zweiten Zusammensetzung ein wenigstens einmaliges, vorzugsweise mehrmaliges, Auftragen der zweiten Zusammensetzung auf die Grundschicht. Der Grundkörper wird nach dem Auftragen der zweiten Zusammensetzung zweckmäßigerweise ebenfalls einer Wärmebehandlung unterzogen, um die aufgetragene Zusammensetzung zu trocknen und/oder zu vernetzen. Auch diese Wärmebehandlung kann je nach Anwendungsfall entweder in einem Ofen oder an der freien Luft durchgeführt werden.

Einzelheiten und weitere Vorteile der Erfindung ergeben sich aus der nachfolgenden Beschreibung bevorzugter Ausführungsbeispiele. In den die Ausführungsbeispiele schematisch veranschaulichenden Zeichnungen zeigen im Einzelnen:
- Fig. 1a: einen Längsschnitt durch eine an ein Anschlusselement angeschlossene Rohrleitung mit einem Bördel der Form F;
- Fig. 1b: einen Längsschnitt entsprechend Fig. 1a mit einem Bördel der Form E;
- Fig. 2: ein Schliffbild einer Funktionsschicht;
- Fig. 3a: ein Diagramm, das eine gemessene axiale Last für Überwurfschrauben zeigt, die mit herkömmlichen Zink-Nickel- und Gleitmittelbeschichtungen versehen sind;
- Fig. 3b: ein Diagramm, das eine gemessene axiale Last für Überwurfschrauben zeigt, die erfindungsgemäß beschichtet sind;
- Fig. 3c: ein Diagramm, das ein gemessenes Rohrdrehmoment für Überwurfschrauben zeigt, die erfindungsgemäß beschichtet sind; und
- Fig. 4: eine Darstellung, die den der Erfindung immanenten "Rutsch"-Effekt zeigt.

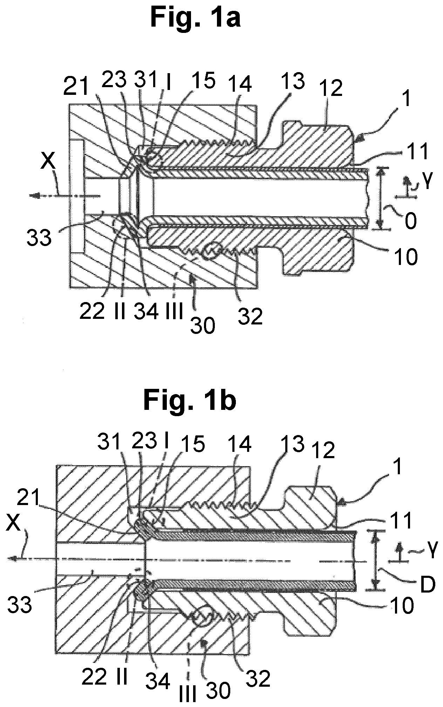

Die in Fig. 1a dargestellte Ausführungsform weist eine mit einem Bördel 21 der Form F gemäß der Norm DIN 74 234:1992-09 versehene Rohrleitung 20 auf, die mittels einer Überwurfschraube 1 oder Rohrschraube an einem Anschlusselement 30, bei dem es sich zum Beispiel um ein Aggregat des Bremssystems eines Kraftfahrzeugs handelt, befestigt ist. Der Bördel 21 weist eine Dichtfläche 22 und eine Anlagefläche 23 auf. Das Anschlusselement 30 weist ein Gewindeloch 31, das heißt eine mit einem Innengewinde 32 versehene Öffnung 31 auf, die in eine Leitung 33 mündet. Das Gewindeloch 31 weist eine sich am Grund der Öffnung befindende Anschlussfläche 34 auf, welche die Leitung 32 umrandet und im Fall der Fig. 1a konkav ausgestaltet ist.

Die Überwurfschraube 1 weist einen metallenen Grundkörper 10 auf, der sich in einer axialen Richtung x erstreckt und eine Durchgangsöffnung 11 aufweist, die in einer radialen Richtung r einen Durchmesser D. Die Rohrleitung 20 erstreckt sich durch die Durchgangsöffnung 11 hindurch. An dem Grundkörper 10 ist ein Schraubenkopf 12 ausgebildet, der dazu dient, ein Drehmoment auf die Überwurfschraube 1 zu übertragen. Weiterhin ist an dem Grundkörper 10 ein Gewindeabschnitt 13 ausgebildet, der ein Außengewinde 14 aufweist und dazu dient, die Überwurfschraube 1 in das Innengewinde 32 des Gewindelochs 31 einzuschrauben. Darüber hinaus ist an dem Grundkörper 10 ein Kontaktabschnitt 15 ausgebildet, der dazu dient, an der Anlagefläche 23 des Bördels 21 im eingeschraubten Zustand der Überwurfschraube 1 anzuliegen.

Die in Fig. 1b dargestellte Ausführungsform weist ebenfalls eine mit einem Bördel 21 versehene Rohrleitung 20 auf, die mittels einer Überwurfschraube 1 an einem Anschlusselement 30 befestigt ist. Im Unterschied zu der Ausführungsform gemäß Fig. 1a entspricht der Bördel 21 allerdings nicht der Form F, sondern der Form E gemäß der Norm DIN 74 234:1992-09. Die Dichtfläche 22 ist deshalb konkav ausgestaltet und liegt an der in diesem Fall konvex ausgestalteten Anschlussfläche 34 des Anschlusselements 30 fluiddicht an. Weiter ist zu erkennen, dass der Kontaktabschnitt 15 der Überwurfschraube 1 an der Anlagefläche 23 des Bördels 21 anliegt. Die Rohrleitung 20 wird somit wie bei der Ausführungsform gemäß Fig. 1a mittels des Bördels 21 zwischen dem Kontaktabschnitt 15 der Überwurfschraube 1 und der Anschlussfläche 34 gehalten.

Um sicherzustellen, dass beim Einschrauben der Überwurfschraube 1 in das Gewindeloch 31 keine Torsion der Rohrleitung 20 auftritt, die zu einer unerwünschten Torsionsspannung in der Rohrleitung 20 führte, ist es erstrebenswert, dass in dem Kontaktbereich I zwischen der Kontaktabschnitt 15 der Überwurfschraube 1 und der Anlagefläche 23 des Bördels 21 eine vergleichsweise geringe Reibung auftritt. In dem Kontaktbereich II zwischen der Dichtfläche 22 des Bördels 21 und der Anschlussfläche 34 sowie in dem Kontaktbereich III zwischen dem Außengewinde 14 der Überwurfschraube 1 und dem Innengewinde 32 des Gewindelochs 31 hingegen, ist es vorteilhaft, wenn eine vergleichsweise große Reibung auftritt, um zum einen ein fluiddichtes Anliegen der Rohrleitung 20 an dem Anschlusselement 30 und zum anderen einen festen und dauerhaften Sitz der Überwurfschraube 1 in dem Gewindeloch 31 sicherzustellen.

Um diesen unterschiedlichen Anforderungen zu genügen, ist die Oberfläche der Überwurfschraube 1 mit einer Funktionsschicht 40 versehen, die einen geeigneten Reibwert µ hervorruft. Der Reibwert, auch Reibungszahl genannt, ist eine dimensionslose Zahl, die aus gemessenen physikalischen Eigenschaften berechnet wird und von der Art und der Geometrie der in Kontakt stehenden Oberflächen abhängt. Versuchsaufbauten und Versuchsabläufe zur Ermittlung der Reibwerte beziehungsweise Reibungszahlen beschreiben insbesondere der VDA-Standard 235-203 und die Norm DIN EN ISO 16047:2005.

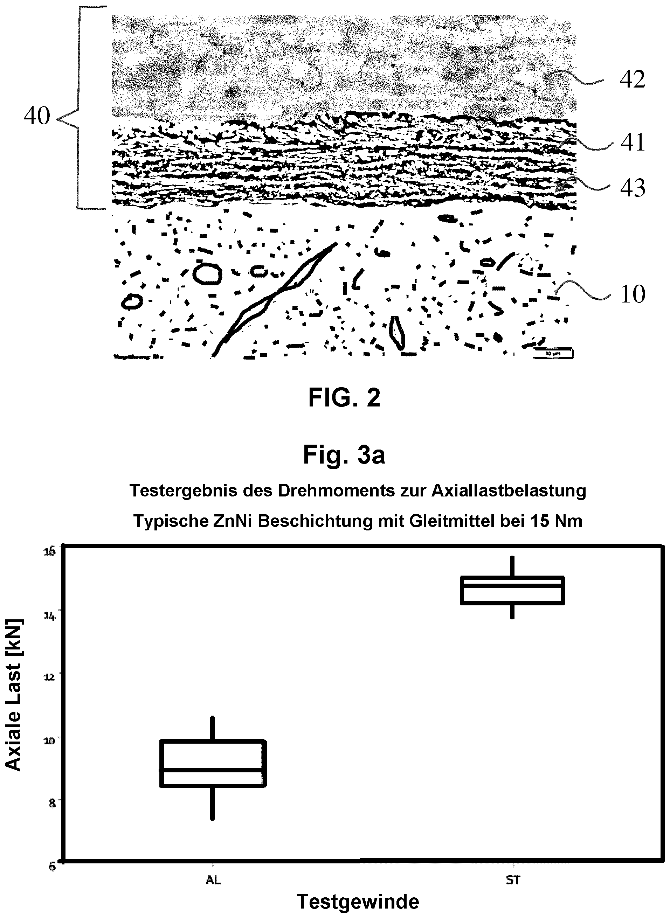

Die Funktionsschicht 40, mit welcher der Grundkörper 10 zumindest im Bereich des Gewindeabschnitts 13 und des Kontaktabschnitts 15 beschichtet ist, ist mehrlagig ausgestaltet und setzt sich zumindest aus einer Grundschicht 41 und einer auf die Grundschicht 41 wenigstens bereichsweise aufgetragenen Deckschicht 42 zusammen. Die Grundschicht 41 erzeugt einen Korrosionsschutz und bildet, wie die Fig. 2 zu erkennen gibt, eine Struktur, die zinkhaltige Lamellen 43, die im Wesentlichen flach auf dem Grundkörper 10 liegend angeordnet sind, und ein Bindemittel umfasst. Die Deckschicht 42 erzeugt einen reibungsvermindernden Überzug, der den Reibwert µ hervorruft, und enthält ein Gleitmittel, das ein Silan umfasst.

Zink ist der wesentliche Bestandteil der Lamellen 43. Die Lamellen 43 enthalten mehr als 50 Gew.-% Zink. Daneben kann in den Lamellen 43 ein weiteres Metall vorhanden sein, das entweder in Form zusätzlicher Lamellen aus diesem weiteren Metall vorliegt, oder mit dem Zink legiert ist. Das weitere Metall ist vorzugsweise Aluminium, Zinn, Magnesium, Nickel, Kobalt oder Mangan. In der vorliegenden Ausführungsform umfasst die Grundschicht 41 eine Mischung von Zink- und Aluminiumlamellen 43.

Die Metallbestandteile der Grundschicht 41 sind durch eine Matrix aus einem Bindemittel verbunden. Das Bindemittel enthält ein Silan. Um eine gute Bindung der Metallbestandteile zu ermöglichen, weist das Silan funktionelle Gruppen auf. Eine bevorzugte reaktive und funktionelle chemische Einheit ist die Epoxygruppe. Ein besonders geeigneter Vertreter eines solchen Epoxysilans ist γ-Glycidoxypropyltrimethoxysilan

Die Grundschicht 41 hat im Bereich des Gewindeabschnitts 13 und/oder im Bereich des Kontaktabschnitts 15 eine Schichtdicke d_{G}, die in der Regel zwischen 0,5 µm und 30,0 µm, im vorliegenden Fall zwischen 5,0 µm und 10,0 µm, beträgt. Die Grundschicht 41 hat eine Flächengewicht M_{G}, das in der Regel zwischen 5,0 g/m² und 40,0 g/m², im vorliegenden Fall zwischen 22,0 g/m² und 26,0 g/m², beträgt.

Die im Vergleich zu der Grundschicht 41 relativ dünne Deckschicht 42 hat im Bereich des Gewindeabschnitts 13 und/oder im Bereich des Kontaktabschnitts 15 eine Schichtdicke d_{D}, die in der Regel weniger als 5,0 µm, im vorliegenden Fall weniger als 1,0 µm, beträgt. Das Flächengewicht M_{G} der Deckschicht 41 beträgt in der Regel zwischen 0,5 g/m² und 15,0 g/m², im vorliegenden Fall zwischen 3,0 g/m² und 5,0 g/m².

Das Verfahren zum Herstellen der Überwurfschraube 1 umfasst die folgenden Verfahrensschritte. Zunächst wird der Grundkörper 10 mit einer ersten Zusammensetzung, die zinkhaltige Lamellen und ein Bindemittel enthält, beschichtet, um die Grundschicht 41 zu erzeugen. Danach wird der Grundkörper 10 in zumindest einem Teilbereich der Grundschicht 41 mit einer zweiten Zusammensetzung, die ein Gleitmittel enthält, beschichtet, um die Deckschicht 42 zu erzeugen. Der Grundkörper 10 kann hierbei im gesamten Bereich der Grundschicht 41 mit der zweiten Zusammensetzung beschichtet werden, ausreichend ist jedoch in der Regel eine Beschichtung in den für die Reibung mit den Reibpartnern, also der Anlagefläche 23 und dem Innengewinde 32, relevanten Bereichen, also insbesondere im Gewindeabschnitt 13 und im Kontaktabschnitt 15.

Bei der Herstellung der Grundschicht 41 wird vorzugsweise eine Suspension der Lamellen 43 in einer flüssigen Phase verwendet. Das Dispergens ist vorzugsweise Wasser, wobei in der Suspension vorteilhafterweise ein Verdickungsmittel, vorliegt, um ihre Viskosität zu erhöhen.

Das Gleitmittel in der Deckschicht 42 ist ein polymerer Fluorkohlenwasserstoff, insbesondere ein perfluorierter Kohlenwasserstoff, weiter vorzugsweise Polytetrafluorethylen. Bei der Herstellung kommt vorzugsweise eine Gleitmitteldispersion zum Einsatz, insbesondere wird Polytetrafluorethylen in einer Flüssigkeit, zum Beispiel Wasser, suspendiert.

Das Beschichten mit der ersten Zusammensetzung erfolgt durch ein wenigstens einmaliges, insbesondere zwei- oder dreimaliges, Auftragen der ersten Zusammensetzung auf den Grundkörper 10. Im Anschluss hieran wird der Grundkörper 10 einer Wärmebehandlung unterzogen, um die aufgetragene Zusammensetzung zu trocknen und/oder zu vernetzen.

Das Beschichten mit der zweiten Zusammensetzung erfolgt ebenfalls durch ein wenigstens einmaliges, vorzugsweise mehrmaliges, Auftragen der zweiten Zusammensetzung auf die Grundschicht 41. Im Anschluss hieran wird der Grundkörper 10 einer Wärmebehandlung unterzogen, um die aufgetragene Zusammensetzung zu trocknen und/oder zu vernetzen.

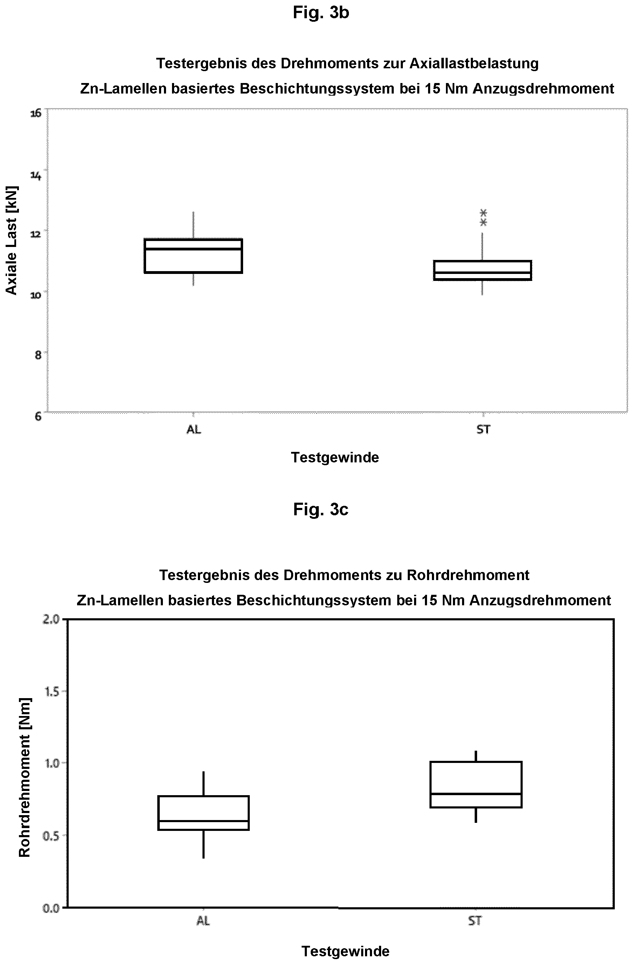

In den Fig. 3a bis 3c sind die sich durch die Funktionsschicht 40 für unterschiedliche Werkstoffe, aus denen die Reibpartner bestehen, ergebenden Werte für eine gemessene axiale Last und ein gemessenes Rohrmoment, also das auf etwa ein Bremsrohr wirkende Moment, dargestellt. Das Diagramm gemäß Fig. 3a zeigt die sich bei herkömmlich beschichteten Überwurfschrauben ergebende axiale Last. Die Diagramme gemäß den Fig. 3b und 3c geben anschaulich zu erkennen, dass, im Unterschied zu konventionellen Beschichtungen, bei den üblichen Werkstoffen Aluminium (AL) und Stahl (ST) die Werte für die axiale Last sowie die Werte für das Rohrdrehmoment bei erfindungsgemäß beschichteten Überwurfschrauben in jeweils zwei Messfolgen relativ nahe beieinander liegen. Damit ermöglicht die Funktionsschicht 40 eine Invarianz der Überwurfschraube 1 in Bezug auf die Reibpartner, die einer praxisgerechten Handhabung Rechnung trägt.

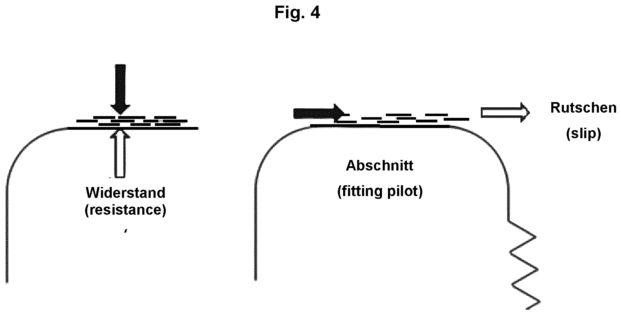

Die Fig. 4. veranschaulicht, dass eine Reduzierung des Rohrdrehmoments eine Funktion der Ebenheit der Zinklamellen und ihrer Parallelität zur Grundschicht ist. Während des Anziehens der Überwurfschraube werden die durch das Drehen der Verschraubung verursachten Scherspannungen in der Grundschicht nicht in dem Maße widerstanden wie den senkrecht wirkenden Kräfte. Dies ermöglicht, wie Fig. 4 ferner zu erkennen gibt, ein "Rutschen" zwischen den Lamellen in der Richtung, in der die Lamellen liegen.

**Bezugszeichenliste**

| | | | |
|---|---|---|---|
| 1 | Überwurfschraube | M_{G} | Flächengewicht der Grundschicht |
| 10 | Grundkörper | M_{D} | Flächengewicht der Deckschicht |
| 11 | Durchgangsöffnung | µ | Reibwert |
| 12 | Schraubenkopf | | |
| 13 | Gewindeabschnitt | l | Länge |
| 14 | Außengewinde | b | Breite |
| 15 | Kontaktabschnitt | d | Dicke |
| 20 | Rohrleitung | D | Durchmesser der Durchgangsöffnung |
| 21 | Bördel | | |
| 22 | Dichtfläche | I | Kontaktbereich mit vergleichsweise geringer Reibung |
| 23 | Anlagefläche | | |
| | | II | Kontaktbereich mit vergleichsweise großer Reibung |
| 30 | Anschlusselement | | |
| 31 | Gewindeloch | III | Kontaktbereich mit vergleichsweise großer Reibung |
| 32 | Innengewinde | | |
| 33 | Leitung | | |
| 34 | Anschlussfläche | | |
| 40 | Funktionsschicht | | |
| 41 | Grundschicht | | |
| 42 | Deckschicht | | |
| 43 | zinkhaltige Lamellen | | |
| x | axiale Richtung | | |
| r | radiale Richtung | | |
| d_{G} | Schichtdicke der Grundschicht | | |
| d_{D} | Schichtdicke der Deckschicht | | |

## Patentansprüche

1. Überwurfschraube für mit wenigstens einem Bördel (21) versehene Rohrleitungen (20), insbesondere Bremsrohre, umfassend:
einen metallenen Grundkörper (10), der sich in einer axialen Richtung (x) erstreckt und eine Durchgangsöffnung (11) aufweist, die in einer radialen Richtung (r) einen Durchmesser (D) hat und dazu ausgestaltet ist, die Rohrleitung (20) aufzunehmen;
einen an dem Grundkörper (10) ausgebildeten Schraubenkopf (12), der dazu ausgestaltet ist, ein Drehmoment auf die Überwurfschraube (1) zu übertragen;
einen an dem Grundkörper (10) ausgebildeten Gewindeabschnitt (13), der ein Außengewinde (14) aufweist und dazu ausgestaltet ist, die Überwurfschraube (1) in ein Gewindeloch (31) einzuschrauben;
einen an dem Grundkörper (10) ausgebildeten Kontaktabschnitt (15), der dazu ausgestaltet ist, an dem Bördel (21) der Rohrleitung (20) anzuliegen, und
eine Funktionsschicht (40), mit welcher der Grundkörper (10) zumindest im Bereich des Gewindeabschnitts (13) und des Kontaktabschnitts (15) beschichtet ist;
wobei die Funktionsschicht (40) mehrlagig ist und sich zumindest aus einer Grundschicht (41) und einer auf die Grundschicht (41) wenigstens bereichsweise aufgetragenen Deckschicht (42) zusammensetzt;
wobei die Deckschicht (42) zum Erzeugen eines reibungsvermindernden Überzugs ein Gleitmittel enthält und
wobei die Grundschicht (41) zum Erzeugen eines Korrosionsschutzes ein Bindemittel und Zink enthält;
**dadurch gekennzeichnet, dass** die Grundschicht (41) eine Struktur bildet, bei der das Zink in Form von zinkhaltigen Lamellen (43) vorliegt;
wobei die zinkhaltigen Lamellen (43) im Wesentlichen flach auf dem Grundkörper (10) liegend ausgerichtet sind.

2. Überwurfschraube nach Anspruch 1, **dadurch gekennzeichnet, dass** die zinkhaltigen Lamellen (43) plättchenförmig sind und eine Länge (I), eine Breite (b) und eine Dicke (d) haben;
wobei vorzugsweise die Länge (I) und/oder die Breite (b) und/oder die Dicke (d) zwischen 5 µm und 500 µm, vorzugsweise zwischen 10 µm und 200 µm, und weiter vorzugsweise zwischen 50 µm und 150 µm, betragen.

3. Überwurfschraube nach Anspruch 1 oder 2, **dadurch gekennzeichnet, dass** die zinkhaltigen Lamellen (43) mehr als 50 Gew.% Zink enthalten;
wobei vorzugsweise die zinkhaltigen Lamellen (43) auch Lamellen eines weiteren Metalls, das vorzugsweise aus einer Gruppe ausgewählt ist, die Aluminium, Zinn, Magnesium, Nickel, Kobalt oder Mangan umfasst, enthalten.

4. Überwurfschraube nach einem der Ansprüche 1 bis 3, **dadurch gekennzeichnet, dass** das Zink mit wenigstens einem weiteren Metall legiert ist;
wobei vorzugsweise das weitere Metall aus einer Gruppe ausgewählt ist, die Aluminium, Zinn, Magnesium, Nickel, Kobalt oder Mangan umfasst;
wobei ferner vorzugsweise die zinkhaltigen Lamellen (43) aus einer Zink-Aluminium-Legierung bestehen.

5. Überwurfschraube nach einem der Ansprüche 1 bis 4, **dadurch gekennzeichnet, dass** das Bindemittel ein Silan enthält;
wobei vorzugsweise das Silan funktionelle Gruppen aufweist;
wobei weiter vorzugsweise das Silan eine Epoxygruppe aufweist;
wobei weiter vorzugsweise das Silan γ-Glycidoxypropyltrimethoxysilan ist.

6. Überwurfschraube nach einem der Ansprüche 1 bis 5, **dadurch gekennzeichnet, dass** das Gleitmittel ein Fluorkohlenwasserstoff, vorzugsweise ein perfluoriertes Kohlenwasserstoff, weiter vorzugsweise Polytetrafluorethylen, enthält.

7. Überwurfschraube nach einem der Ansprüche 1 bis 6, **dadurch gekennzeichnet, dass** der Grundkörper (10) im Bereich des Schraubenkopfes (11) mit der Funktionsschicht (40) beschichtet ist;
wobei vorzugweise die gesamte Oberfläche des Grundkörpers (10) mit der Funktionsschicht (40) beschichtet ist.

8. Überwurfschraube nach einem der Ansprüche 1 bis 7, **dadurch gekennzeichnet,**
**dass** die Deckschicht (42) auf der gesamten Grundschicht (41) aufgetragen ist; und/oder
**dass** die Grundschicht (41) die unterste Lage der Funktionsschicht bildet; und/oder
**dass** die Deckschicht (42) die oberste Lage der Funktionsschicht bildet.

9. Überwurfschraube nach einem der Ansprüche 1 bis 8, **dadurch gekennzeichnet,**
**dass** die Grundschicht (41) zumindest im Bereich des Gewindeabschnitts (13) und/oder im Bereich des Kontaktabschnitts (15) eine Schichtdicke (d_{G}) hat, die zwischen 0,5 µm und 30,0 µm, vorzugsweise zwischen 1,0 µm und 20,0 µm, weiter vorzugsweise zwischen 5,0 µm und 10,0 µm, beträgt; und/oder
**dass** die Deckschicht (42) zumindest im Bereich des Gewindeabschnitts (13) und/oder im Bereich des Kontaktabschnitts (15) eine Schichtdicke (d_{D}) hat, die weniger als 5,0 µm, vorzugsweise weniger als 1,0 µm, weiter vorzugsweise weniger als 0,5 µm, beträgt.

10. Überwurfschraube nach einem der Ansprüche 1 bis 9, **dadurch gekennzeichnet,**
**dass** die Grundschicht (41) ein Flächengewicht (M_{G}) hat, das zwischen 5,0 g/m² und 40,0 g/m², vorzugsweise zwischen 10,0 g/m² und 30,0 g/m², weiter vorzugsweise zwischen 22,0 g/m² und 26,0 g/m², beträgt; und/oder
**dass** die Deckschicht (42) ein Flächengewicht (M_{G}) hat, das zwischen 0,5 g/m² und 15,0 g/m², vorzugsweise zwischen 1,0 g/m² und 10,0 g/m², weiter vorzugsweise zwischen 3,0 g/m² und 5,0 g/m², beträgt.

11. Verwendung einer Überwurfschraube (1) nach einem der Ansprüche 1 bis 10 für eine mit einem Bördel (21) versehene Rohrleitung (20), insbesondere ein Bremsrohr.

12. Verfahren zum Herstellen einer Überwurfschraube (1) nach einem der Ansprüche 1 bis 10, **gekennzeichnet durch** folgende Verfahrensschritte:
a) Beschichten des Grundkörpers (10) mit einer ersten Zusammensetzung, die zinkhaltige Lamellen und ein Bindemittel enthält, um die Grundschicht (41) zu erzeugen, wobei die zinkhaltigen Lamellen im Wesentlichen flach auf den Grundkörper liegend ausgerichtet werden;
b) Beschichten des Grundkörpers (10) in zumindest einem Teilbereich der Grundschicht (41) mit einer zweiten Zusammensetzung, die ein Gleitmittel enthält, um die Deckschicht (42) zu erzeugen.

13. Verfahren nach Anspruch 12, **dadurch gekennzeichnet, dass** der Grundkörper (10) im gesamten Bereich der Grundschicht (41) mit der zweiten Zusammensetzung beschichtet wird.

14. Verfahren nach Anspruch 12 oder 13, **dadurch gekennzeichnet, dass** die erste Zusammensetzung eine wässrige Dispersion ist;
wobei vorzugsweise die erste Zusammensetzung eine Suspension ist;
wobei weiter vorzugsweise die erste Zusammensetzung umfasst:
plättchenförmige Partikel in Form von Lamellen, die Zink enthalten, und
ein Bindemittel, das vorzugsweise ein Silan enthält;
wobei weiter vorzugsweise die erste Zusammensetzung ferner umfasst:
ein Lösungsmittel, das vorzugsweise organisch ist, und/oder Wasser;
wobei weiter vorzugsweise die erste Zusammensetzung ferner umfasst:
ein Verdickungsmittel.

15. Verfahren nach einem der Ansprüche 12 bis 14, **dadurch gekennzeichnet, dass** die zweite Zusammensetzung eine wässrige Dispersion ist;
wobei vorzugsweise das Gleitmittel ein Fluorkohlenwasserstoff, vorzugsweise ein perfluoriertes Kohlenwasserstoff, weiter vorzugsweise Polytetrafluorethylen, enthält.

16. Verfahren nach einem der Ansprüche 12 bis 15, **dadurch gekennzeichnet, dass** das Beschichten gemäß Verfahrensschritt a) ein wenigstens einmaliges, vorzugsweise mehrmaliges, insbesondere zweimaliges, Auftragen der ersten Zusammensetzung auf den Grundkörper (10) umfasst;
wobei vorzugsweise der Grundkörper (10) nach dem Auftragen der ersten Zusammensetzung einer Wärmebehandlung unterzogen wird, um die aufgetragene Zusammensetzung zu trocknen und/oder zu vernetzen.

17. Verfahren nach einem der Ansprüche 12 bis 16, **dadurch gekennzeichnet, dass** das Beschichten gemäß Verfahrensschritt b) ein wenigstens einmaliges, vorzugsweise mehrmaliges, Auftragen der zweiten Zusammensetzung auf die Grundschicht (41) umfasst;
wobei vorzugsweise der Grundkörper (10) nach dem Auftragen der zweiten Zusammensetzung einer Wärmebehandlung unterzogen wird, um die aufgetragene Zusammensetzung zu trocknen und/oder zu vernetzen.

## Claims

1. A union screw for pipes (20) provided with at least one flare (21), in particular brake pipes, comprising:
a metal base body (10) extending in an axial direction (x) and having a through opening (11) having a diameter (D) in a radial direction (r) and adapted to receive the pipe (20);
a screw head (12) formed on the base body (10), which is configured to transmit a torque to the union screw (1);
a threaded portion (13) formed on the base body (10), the threaded portion (13) having an external thread (14) and being adapted to screw the union screw (1) into a tapped hole (31);
a contact portion (15) formed on the base body (10) and adapted to abut the flare (21) of the pipe (20), and
a functional layer (40) with which the base body (10) is coated at least in the region of the threaded portion (13) and the contact portion (15);
wherein the functional layer (40) is multilayered and is composed at least of a base coat (41) and a top coat (42) applied to the base coat (41) at least in regions;
wherein the top coat (42) contains a lubricant to provide a friction reducing coating, and
wherein the base coat (41) comprises a binder and zinc to provide corrosion protection;
**characterized in that** the base coat (41) forms a structure in which the zinc is in the form of zinc-containing lamellae (43);
wherein the zinc-containing lamellae (43) are oriented to lie substantially flat on the base body (10).

2. The union screw according to claim 1, **characterized in that** the zinc-containing lamellae (43) are platelet-shaped and have a length (I), a width (b), and a thickness (d);
wherein preferably the length (I) and/or the width (b) and/or the thickness (d) is between 5 µm and 500 µm, preferably between 10 µm and 200 µm, and further preferably between 50 µm and 150 µm.

3. The union screw according to claim 1 or 2, **characterized in that** the zinc-containing lamellae (43) contain more than 50% by weight of zinc;
wherein preferably the zinc-containing lamellae (43) also contain lamellae of another metal preferably selected from a group comprising aluminium, tin, magnesium, nickel, cobalt or manganese.

4. The union screw according to any one of claims 1 to 3, **characterised in that** the zinc is alloyed with at least one further metal;
wherein preferably the further metal is selected from a group comprising aluminium, tin, magnesium, nickel, cobalt or manganese;
wherein further preferably the zinc-containing lamellae (43) are made of a zinc-aluminium alloy.

5. The union screw according to any one of claims 1 to 4, **characterised in that** the binder comprises a silane;
wherein preferably the silane has functional groups;
wherein further preferably the silane has an epoxy group;
wherein further preferably the silane is γ-glycidoxypropyltrimethoxysilane.

6. The union screw according to any one of claims 1 to 5, **characterized in that** the lubricant comprises a hydrofluorocarbon, preferably a perfluorinated hydrocarbon, more preferably polytetrafluoroethylene.

7. The union screw according to any one of claims 1 to 6, **characterized in that** the base body (10) is coated with the functional layer (40) in the region of the screw head (11);
wherein preferably the entire surface of the base body (10) is coated with the functional layer (40).

8. The union screw according to any one of claims 1 to 7, **characterised in that**
the top coat (42) is applied to the entire base coat (41); and/or
the base coat (41) forms the lowermost layer of the functional layer; and/or
the top coat (42) forms the uppermost layer of the functional layer.

9. The union screw according to any one of claims 1 to 8, **characterized in that**
at least in the region of the threaded portion (13) and/or in the region of the contact portion (15), the base coat (41) has a layer thickness (d_{G}) which is between 0.5 µm and 30.0 µm, preferably between 1.0 µm and 20.0 µm, further preferably between 5.0 µm and 10.0 µm; and/or
at least in the region of the threaded portion (13) and/or in the region of the contact portion (15), the top coat (42) has a layer thickness (d_{D}) which is less than 5.0 µm, preferably less than 1.0 µm, further preferably less than 0.5 µm.

10. The union screw according to any one of claims 1 to 9, **characterised in that**
the base coat (41) has a weight per unit area (M_{G}) which is between 5.0 g/m² and 40.0 g/m², preferably between 10.0 g/m² and 30.0 g/m², further preferably between 22.0 g/m² and 26.0 g/m²; and/or
the top coat (42) has a weight per unit area (M_{G}) which is between 0.5 g/m² and 15.0 g/m², preferably between 1.0 g/m² and 10.0 g/m², further preferably between 3.0 g/m² and 5.0 g/m².

11. Use of the union screw (1) according to any one of claims 1 to 10 for a pipe (20) provided with a flare (21), in particular a brake pipe.

12. A method of manufacturing a union screw (1) according to any one of claims 1 to 10, **characterized by** the following method steps:
a) Coating the base body (10) with a first composition comprising zinc-containing lamellae and a binder to form the base coat (41), wherein the zinc-containing lamellae are oriented to lie substantially flat on the base body;
b) Coating the base body (10) in at least a portion of the base coat (41) with a second composition comprising a lubricant to produce the top coat (42).

13. The method according to claim 12, **characterized in that** the base body (10) is coated with the second composition in the entire area of the base coat (41).

14. The method of claim 12 or 13, **characterized in that** the first composition is an aqueous dispersion;
wherein preferably the first composition is a suspension;
wherein further preferably the first composition comprises:
platelet-shaped particles in the form of lamellae containing zinc, and
a binder which preferably contains a silane;
wherein further preferably the first composition further comprises:
a solvent, which is preferably organic, and/or
water;
wherein further preferably the first composition further comprises:
a thickening agent.

15. The method of any one of claims 12 to 14, **characterized in that** the second composition is an aqueous dispersion;
wherein preferably the lubricant comprises a hydrofluorocarbon, preferably a perfluorinated hydrocarbon, more preferably polytetrafluoroethylene.

16. The method according to any one of claims 12 to 15, **characterized in that** the coating according to method step a) comprises applying the first composition to the base body (10) at least once, preferably several times, in particular twice;
wherein preferably the base body (10) is subjected to a heat treatment after the application of the first composition in order to dry and/or crosslink the applied composition.

17. The method according to any one of claims 12 to 16, **characterized in that** the coating according to method step b) comprises applying the second composition to the base coat (41) at least once, preferably several times;
wherein preferably the base body (10) is subjected to a heat treatment after the application of the second composition in order to dry and/or crosslink the applied composition.

## Revendications

1. Vis union pour tuyaux (20), en particulier tuyaux de frein, pourvus d'au moins un évasement (21), comprenant:
un corps de base métallique (10) s'étendant dans une direction axiale (x) et ayant une ouverture traversante (11) qui a un diamètre (D) dans une direction radiale (r) et est conçue pour recevoir la canalisation (20);
une tête de vis (12) formée sur le corps de base (10), qui est conçue pour transmettre un couple à la vis de bouchon (1);
une partie filetée (13) formée sur le corps de base (10), qui présente un filetage externe (14) et est conçue pour visser la vis à capuchon (1) dans un trou fileté (31);
une partie de contact (15) formée sur le corps de base (10) et adaptée pour venir en butée contre l'évasement (21) du conduit (20), et
une couche fonctionnelle (40) avec laquelle le corps de base (10) est revêtu au moins dans la région de la section filetée (13) et de la section de contact (15);
dans lequel la couche fonctionnelle (40) est multicouche et est composée au moins d'une couche de base (41) et d'une couche supérieure (42) appliquée sur la couche de base (41) au moins par zones;
dans lequel la couche supérieure (42) contient un lubrifiant pour créer un revêtement réduisant la friction, et
dans lequel la couche de base (41) contient un liant et du zinc pour assurer une protection contre la corrosion;
**caractérisé en ce que** la couche de base (41) forme une structure dans laquelle le zinc est sous la forme de lamelles contenant du zinc (43);
dans lequel les lamelles contenant du zinc (43) sont orientées pour reposer sensiblement à plat sur le corps de base (10).

2. Vis union selon la revendication 1, **caractérisée en ce que** les lamelles contenant du zinc (43) sont en forme de plaquettes et ont une longueur (I), une largeur (b) et une épaisseur (d);
dans laquelle, de préférence, la longueur (I) et/ou la largeur (b) et/ou l'épaisseur (d) est comprise entre 5 µm et 500 µm, de préférence entre 10 µm et 200 µm, et de préférence encore entre 50 µm et 150 µm.

3. Vis union selon la revendication 1 ou 2, **caractérisée en ce que** les lamelles contenant du zinc (43) contiennent plus de 50% en poids de zinc;
dans lequel, de préférence, les lamelles (43) contenant du zinc contiennent également des lamelles d'un autre métal choisi de préférence dans un groupe comprenant l'aluminium, l'étain, le magnésium, le nickel, le cobalt ou le manganèse.

4. Vis union selon l'une quelconque des revendications 1 à 3, **caractérisée en ce que** le zinc est allié à au moins un autre métal;
dans lequel, de préférence, l'autre métal est choisi dans un groupe comprenant l'aluminium, l'étain, le magnésium, le nickel, le cobalt ou le manganèse;
dans lequel, de préférence encore, les lamelles contenant du zinc (43) consistent en un alliage zinc-aluminium.

5. Vis union selon l'une quelconque des revendications 1 à 4, **caractérisée en ce que** le liant comprend un silane;
dans lequel, de préférence, le silane comporte des groupes fonctionnels;
où, de préférence, le silane a un groupe époxy;
où, de préférence, le silane est le γ-glycidoxypropyltriméthoxysilane.

6. Vis union selon l'une quelconque des revendications 1 à 5, **caractérisée en ce que** le lubrifiant comprend un hydrofluorocarbone, de préférence un hydrocarbure perfluoré, plus préférentiellement du polytétrafluoroéthylène.

7. Vis union selon l'une des revendications 1 à 6, **caractérisée en ce que** le corps de base (10) est revêtu de la couche fonctionnelle (40) dans la région de la tête de vis (11);
dans lequel, de préférence, la totalité de la surface du corps de base (10) est revêtue de la couche fonctionnelle (40).

8. Vis union selon l'une quelconque des revendications 1 à 7, **caractérisée en ce que**,
la couche supérieure (42) est appliquée sur la totalité de la couche de base (41); et/ou
la couche de base (41) forme la couche la plus basse de la couche fonctionnelle ; et/ou
la couche supérieure (42) forme la couche la plus élevée de la couche fonctionnelle.

9. Vis union selon l'une quelconque des revendications 1 à 8, **caractérisée en ce que**,
la couche de base (41), au moins dans la région de la partie filetée (13) et/ou dans la région de la partie de contact (15), a une épaisseur de couche (d_{G}) qui est comprise entre 0,5 µm et 30,0 µm, de préférence entre 1,0 µm et 20,0 µm, plus préférablement entre 5,0 µm et 10,0 µm; et/ou
la couche de recouvrement (42), au moins dans la région de la partie filetée (13) et/ou dans la région de la partie de contact (15), a une épaisseur de couche (do) qui est inférieure à 5,0 µm, de préférence inférieure à 1,0 µm, encore plus préférablement inférieure à 0,5 µm.

10. Vis union selon l'une quelconque des revendications 1 à 9, **caractérisée en ce que**,
la couche de base (41) a un poids par unité de surface (M_{G}) qui est compris entre 5,0 g/m² et 40,0 g/m², de préférence entre 10,0 g/m² et 30,0 g/m², plus préférablement entre 22,0 g/m² et 26,0 g/m²; et/ou
la couche supérieure (42) a un poids par unité de surface (M_{G}) qui est compris entre 0,5 g/m² et 15,0 g/m², de préférence entre 1,0 g/m² et 10,0 g/m², plus préférablement entre 3,0 g/m² et 5,0 g/m².

11. Utilisation d'une vis union (1) selon l'une quelconque des revendications 1 à 10 pour un tuyau (20) muni d'un évasement (21), notamment un tuyau de frein.

12. Procédé de fabrication d'une vis union (1) selon l'une des revendications 1 à 10, **caractérisé par** les étapes de procédé suivantes :
a) revêtement du corps de base (10) avec une première composition comprenant des lamelles contenant du zinc et un liant pour former la couche de base (41), dans laquelle les lamelles contenant du zinc sont orientées pour reposer sensiblement à plat sur le corps de base ;
b) revêtir le corps de base (10) dans au moins une zone partielle de la couche de base (41) avec une seconde composition contenant un lubrifiant pour produire la couche supérieure (42).

13. Procédé selon la revendication 12, **caractérisé en ce que** le corps de base (10) est revêtu de la deuxième composition dans toute la région de la couche de base (41).

14. Procédé selon la revendication 12 ou 13, **caractérisé en ce que** la première composition est une dispersion aqueuse;
dans laquelle, de préférence, la première composition est une suspension;
dans laquelle, de préférence encore, la première composition comprend:
des particules en forme de plaquettes sous forme de lamelles contenant du zinc,
et
un liant qui contient de préférence un silane;
dans laquelle, de préférence, la première composition comprend en outre:
un solvant, qui est de préférence organique, et/ou
l'eau;
dans laquelle, de préférence, la première composition comprend en outre:
un agent épaississant.

15. Procédé selon l'une quelconque des revendications 12 à 14, **caractérisé en ce que** la deuxième composition est une dispersion aqueuse;
dans lequel le lubrifiant comprend de préférence un hydrofluorocarbone, de préférence un hydrocarbure perfluoré, de préférence encore du polytétrafluoroéthylène.

16. Procédé selon l'une quelconque des revendications 12 à 15, **caractérisé en ce que** le revêtement selon l'étape a) du procédé comprend l'application de la première composition sur le corps de base (10) au moins une fois, de préférence plusieurs fois, en particulier deux fois;
dans lequel, de préférence, le corps de base (10) est soumis à un traitement thermique après l'application de la première composition afin de sécher et/ou de réticuler la composition appliquée.

17. Procédé selon l'une quelconque des revendications 12 à 16, **caractérisé en ce que** le revêtement selon l'étape b) du procédé comprend l'application de la deuxième composition sur la couche de base (41) au moins une fois, de préférence plusieurs fois;
dans lequel, de préférence, le corps de base (10) est soumis à un traitement thermique après l'application de la seconde composition afin de sécher et/ou de réticuler la composition appliquée.
